# EUROPÄISCHE PATENTANMELDUNG

(11) **EP 1 420 106 A1**
(43) Veröffentlichungstag der Anmeldung: **19.05.2004**
(21) Anmeldenummer: 03405800.8
(22) Anmeldetag: 10.11.2003
(51) Int. Cl.: D06F 95/00, B65G 47/61, A47G 25/40

(54) **Wäschestückträger sowie Ladestation**

(30) Priorität: 15.11.2002 EP 02025749
(71) Anmelder: Jensen AG Burgdorf, 3400 Burgdorf (CH)
(72) Erfinder: Jensen, Jesper, 3073 Gümligen (CH); Knöfel, Thomas, 3400 Burgdorf (CH); Rauch, Martin, 3415 Hasle-Rüeggsau (CH)
(74) Vertreter: Wagner, Wolfgang Heribert

(57) **Zusammenfassung**

Ein Wäschestückträger (20) zum Transport von z.B. gefalteten Wäschestücken längs einer Schiene (22) weist eine gitterartige Rückwand mit an ihrem oberen Ende einem Haken auf, an deren unterem Ende ein Boden einer Klappe schwenkbar gelagert ist. An den Boden schliesst rechtwinklig eine Frontwand aus drei seitlich beabstandeten Bügeln (12a-c) an. Das obere Ende des mittleren Bügels (12b) ist in einer geschlossenen Transportstellung der Klappe mit der Rückwand verriegelbar. Zum Beladen wird der Wäschestückträger (20) in einer Ladestation über dem Endbereich eines Bandförderers (31) mit der Rückwand an eine Anlagefläche gelegt und die Klappe entriegelt und mittels einer Umstellvorrichtung, die mit einem Fortsatz am Boden der Klappe eingreift, nach unten geklappt, derart, dass die Bügel (12a-c) der Frontwand zwischen den freiliegenden und etwas erhöhten Bändern (32a-d) liegen. Nachdem der Bandförderer (31) das Wäschestück über die Frontplatte geschoben hat, wird die Klappe mittels der Umstellvorrichtung wieder hochgeklappt, verriegelt und der Wäschestückträger (20) weitertransportiert. Das Entladen des Wäschestückträgers (20) erfolgt analog in einer im wesentlichen gleich aufgebauten Ladestation.

## Beschreibung

### Technisches Gebiet

Die Erfindung betrifft einen Wäschestückträger zur Aufnahme von Wäschestücken sowie eine Ladestation zum Be- oder Entladen eines derartigen Wäschestückträgers. Mit Wäschestückträgern der beschriebenen Art können vor allem auch gefaltete Wäschestücke sicher transportiert und sortiert werden.

### Stand der Technik

Es ist bekannt, in Transportanlagen Kleiderbügel als Wäschestückträger einzusetzen, an denen Kleidungsstücke aufgehängt sind. Eine solche Transportanlage ist z.B. in der EP-0 301 476 A1 beschrieben. Dort wird ein Kleiderbügel, an dem ein Kleidungsstück hängt, längs einer Schiene zu einer Faltstation geführt, wo das Kleidungsstück an einer schrägen Anlagefläche anliegt und der Bügel entladen wird, indem er parallel zur Anlagefläche nach oben gezogen und dabei seine Arme entriegelt und nach unten geklappt werden. Eine ähnliche Transportanlage ist auch US-3 840 103 A entnehmbar. Der Einsatz von Kleiderbügeln hat den Nachteil, dass Kleidungsstücke nicht in gefaltetem Zustand transportiert werden können. Die Faltung derselben kann daher erst in einem nachgeschalteten Arbeitsgang erfolgen. Es ist aber oft wünschenswert, dass die Faltung bereits frühzeitig, z.B. vor einer Sortierung vorgenommen werden kann. Ausserdem können viele Kleidungsstücke und andere Wäschestücke nicht auf Kleiderbügel gehängt werden und sind daher gar nicht auf diese Weise handhabbar.

Aus US-4 580 705 A ist ein Träger bekannt, welcher einen rechteckigen Rahmen umfasst und einen sich über seine ganze Breite erstreckenden kurzen Bügel, welcher um eine etwas oberhalb seines unteren Endes im Rahmen angeordnete waagrechte Achse drehbar ist. Er ist offenbar vor allem für den Transport von rechteckigen Stoffabschnitten in Betrieben der Bekleidungsindustrie gedacht, welche am Rahmen aufgehängt und mittels des Bügels festgehalten werden können. Er ist jedoch nicht zum Transport verschiedenerartiger gefalteter oder ungefalteter Wäschestücke geeignet.

GB-1 164 813 A zeigt eine Klammer für den Transport von lebenden oder geschlachteten Hühnern, mit einem Tragteil, welches an seinem oberen Ende ein Kupplungsteil zur Herstellung einer Verbindung mit einer Transporteinrichtung aufweist sowie mit einem Bügel, welcher um eine waagrechte Achse am unteren Ende des Tragteils drehbar ist und in einer Klemmlage, in welcher er zum Tragteil im wesentlichen parallel ist, mittels einer im Bereich des oberen Endes des Tragteils angeordneten Verriegelungsvorrichtung verriegelt werden kann.

### Darstellung der Erfindung

Der Erfindung liegt die Aufgabe zu Grunde, einen Wäschestückträger anzugeben, der geeignet ist, auch gefaltete Wäschestücke aufzunehmen und in ihrem gefalteten Zustand sicher zu fixieren, während sie z.B. transportiert und sortiert werden. Der erfindungsgemässe Wäschestückträger soll sich auch dazu eignen, automatisch beladen und entladen zu werden. Die Aufgabe wird durch die Merkmale im Kennzeichen des Anspruchs 1 erfüllt.

Eine weitere Aufgabe der Erfindung liegt darin, eine Ladestation zum automatischen Beladen oder Entladen erfindungsgemässer Wäschestückträger anzugeben. Diese Aufgabe wird durch die Merkmale des Anspruchs 11 erfüllt.

Die Erfindung erlaubt es, ein Transportsystem zu realisieren, mit dem auch gefaltete Wäschestücke nahezu beliebiger Art transportiert und beispielsweise sortiert werden können und das darüberhinaus völlig automatisch arbeitet. Dadurch wird eine grössere Flexibilität in der Anlagenplanung und Vereinfachung des Betriebs der Anlage erreicht. Vor allem ist es möglich, die Wäschestücke frühzeitig im Verarbeitungsprozess zu falten. Dadurch wird auch in vielen Fällen bei mindestens einem Teil der Anlage der Platzbedarf in der Höhe wesentlich reduziert, da bei auf das Falten und Beladen des Wäschestückträgers folgenden Verarbeitungsschritten, insbesondere Sortieren, auf die Länge der gefalteten statt der ungefalteten Wäschestücke abgestellt werden kann.

### Kurze Beschreibung der Zeichnungen

Im folgenden wird die Erfindung anhand von Figuren, welche lediglich Ausführungsbeispiele darstellen, näher erläutert.
Es zeigen
- Fig. 1: eine Hinteransicht eines erfindungsgemässen Wäschestückträgers in offenem Zustand,
- Fig. 2: eine Ansicht schräg von vorn des erfindungsgemässen Wäschestückträgers im offenen Zustand,
- Fig. 3: eine Vorderansicht des erfindungsgemässen Wäschestückträgers in geschlossenem Zustand,
- Fig. 4: eine Seitenansicht des erfindungsgemässen Wäschestückträgers im geschlossenen Zustand,
- Fig. 4a: vergrössert den mit A bezeichneten Ausschnitt aus Fig. 4 sowie einen Stössel einer Entriegelungsvorrichtung,
- Fig. 5: einen Längsschnitt durch eine erfindungsgemässe Ladestation längs V-V in Fig. 6,
- Fig. 6: eine Draufsicht auf die erfindungsgemässe Ladestation und
- Fig. 7a-e: verschiedene Stadien der Beladung eines erfindungsgemässen Wäschestückträgers mit einem Wäschestück in einer erfindungsgemässen Ladestation.

### Wege zur Ausführung der Erfindung

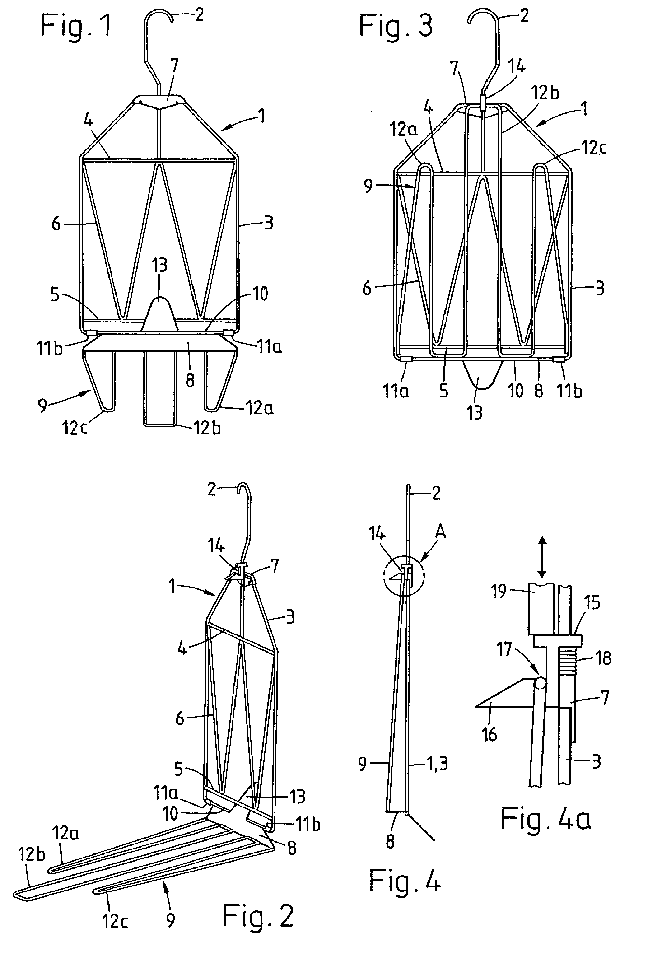

Der erfindungsgemässe Wäschestückträger für den Transport von Wäschestücken weist (Fig. 1-4) eine ebene Rückwand 1 auf, an deren oberem Ende als Kupplungsteil für die Verbindung mit einer Transporteinrichtung ein Haken 2 angebracht ist. Die Rückwand 1 ist gitterartig aus Metallstäben aufgebaut mit einem umlaufenden Rahmen 3. Ein oberer Querstab 4 trennt ihren trapezförmigen oberen Teil von ihrem in Längsrichtung anschliessenden rechteckigen unteren Teil. Knapp oberhalb des unteren Endes des Rahmens 3 ist ein weiterer Querstab 5 angeordnet. Zwischen den beiden Querstäben 4, 5 verläuft zickzackförmig ein Gitterelement 6.

Mittig am oberen Ende des Rahmens 3 ist eine Platte 7 aus Kunststoff angebracht, welche mit einer Kennung versehen ist, vorzugsweise mit einem eingegossenen Transponder.

Am unteren Ende der Rückwand 1 ist eine Klappe angelenkt mit einem ebenen Boden 8 aus Blech und einer unter einem rechten Winkel an denselben anschliessenden gitterartigen Frontwand 9. Dazu trägt der hintere Rand des Bodens 8 eine in der Ebene der Rückwand 1 querverlaufende Achse 10, die über Scharniere 11a,b am unteren Ende der Rückwand 1 mit deren Rahmen 3 schwenkbar verbunden ist. Die Klappe ist um die Achse 10 zwischen einer Transportstellung, in der die Frontwand 9 zur Rückwand 1 im wesentlichen parallel und der Wäschestückträger geschlossen ist und einer Ladestellung, in der die Frontwand 9 mit der Rückwand einen Winkel grösser als 90° einschliesst und der Wäschestückträger mithin offen ist, verschwenkbar. Die Frontwand 9 weist drei gerade, parallele, seitlich voneinander beabstandete jochförmige Bügel 12a,b,c auf, die am Boden 8 verankert sind. Zwischen dem mittleren Bügel 12b und den beiden seitlichen Bügeln 12a,c liegen über deren ganze Länge durchgehende freie Streifen der Frontwand 9. Der mittlere Bügel 12b reicht in der Transportstellung bis zum oberen Ende der Rückwand 1, während die seitlichen Bügel 12a,c kürzer sind und nur etwas über den oberen Querstab 4 hinausragen. Die Rückwand 1 und die Frontwand 9 sind zwischen 15cm und 40cm, vorzugsweise ca. 25cm breit und zwischen 20cm und 50cm, vorzugsweise ca. 35cm lang.

Etwa in der Mitte des hinteren Randes weist der Boden 8 einen zungenförmigen Fortsatz 13 auf, welcher an der Rückseite der Rückwand 1 über dieselbe vorragt und zum Verschwenken der Klappe mittels einer Umstellvorrichtung dient. Am oberen Ende des Rahmens 3 der Rückwand 1 ist eine lösbare Verriegelung 14 angeordnet, welche mit dem mittleren Bügel 12b der Frontwand 9 zusammenwirkt. Die Verriegelung 14 umfasst (Fig. 4a) einen Schieber 15 mit einem schnabelförmigen Fortsatz 16 mit rampenartiger Oberseite, auf die eine Ausnehmung 17 folgt. Der Schieber 15 kann gegen die Kraft einer an der Platte 7 abgestützten Druckfeder 18 nach unten geschoben werden. Wird die Frontwand 9 aus der Ladestellung in die Transportstellung hochgeklappt, so gleitet der querverlaufende mittlere Abschnitt des mittleren Bügels 12b über die Oberseite des Fortsatzes 16 und drückt dabei den Schieber 15 nach unten, bis er in die Ausnehmung 17 einschnappt. Die Klappe ist damit in der Transportstellung verriegelt. Zum Entriegeln wird der Schieber 15 durch einen Stössel 19 einer Entriegelungsvorrichtung nach unten gedrückt, bis der mittlere Bügel 12b von der Ausnehmung 17 frei wird und die Klappe geöffnet und in die Ladestellung geklappt werden kann.

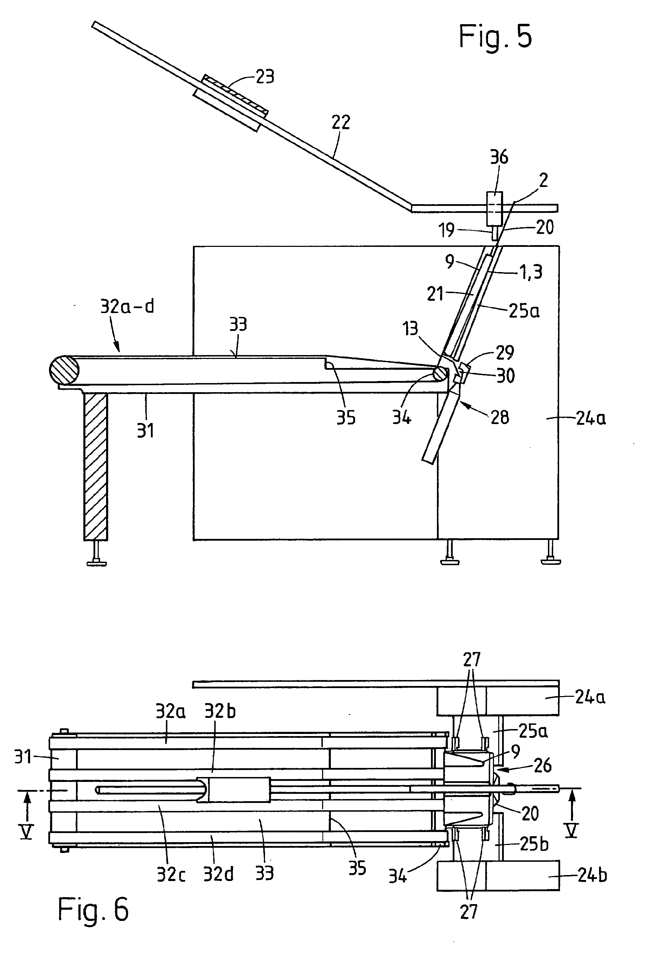

Die Erfindung umfasst auch eine Ladestation (Fig. 5, 6) zum Beladen oder Entladen erfindungsgemässer Wäschestückträger. Ein solcher Wäschestückträger 20 kann z.B. mit einem gefalteten Kittel 21 beladen werden. In einer Anlage zur Bearbeitung von Wäschestücken sind gewöhnlich sowohl eine Beladestation als auch eine Entladestation vorhanden. Die beiden Ladestationen können jedoch ganz oder nahezu identisch aufgebaut sein, so dass sie sich im wesentlichen nur durch die Betriebsweise unterscheiden. Im folgenden wird als Beispiel einer erfindungsgemässen Ladestation eine Beladestation geschildert.

Die Beladestation ist unterhalb eines Abschnitts einer Transporteinrichtung angeordnet mit einer Schiene 22, längs welcher in regelmässigen Abständen Mitnehmer laufen, die mit dem Haken 2 eines an der Schiene 22 hängenden Wäschestückträgers 20 eingreifen und ihn längs derselben verschieben. Etwas vor der Beladestation ist ein Vereinzeler 23 angeordnet, welcher angelieferte Wäschestückträger 20 zurückhält und in vorbestimmten Zeitabständen einzeln für den Weitertransport zu einem Stopper (nicht dargestellt) freigibt. Unterhalb des Stoppers ist eine Ladestation angeordnet mit zwei seitlich voneinander beabstandeten Ständern 24a,b, an deren Innenseiten gegeneinander weisende Flügel 25a,b angeschlagen sind, die mittels Pneumatikkolben (nicht dargestellt) nach hinten wegklappbar sind. Sie bilden eine leicht in Transportrichtung geneigte, in der Mitte durch einen durchgehenden Spalt 26 unterbrochene Anlagefläche, die zur Positionierung eines Wäschestückträgers 20 in der Ladestation dient.

Ueber die Anlagefläche ragen durch Schlitze in den Flügeln 25a,b jeweils zwei übereinander angeordnete Fixiernocken 27, die durch an den Rückseiten der Flügel 25a,b angebrachte Pneumatikzylinder zur Fixierung des Wäschestückträgers 20 aufeinander zu geschoben werden können, so dass sie die Seitenteile des Rahmens 3 der Rückwand 1 übergreifen. Am unteren Ende des mittigen Spalts 26 ist eine Umstellvorrichtung 28 angeordnet, ein Pneumatikzylinder, dessen Kolben parallel zur Anlagefläche verschiebbar ist und einen Kopf 29 mit einer Quernut 30 zur Aufnahme des Fortsatzes 13 des Wäschestückträgers 20 trägt.

Die Beladestation umfasst auch einen mit den Ständern 24a,b verbundenen Bandförderer 31, dessen Ende knapp vor dem unteren Ende der Anlagefläche und knapp unterhalb derselben liegt. Er weist vier seitlich mit Abstand nebeneinander liegende Bänder 32a-d auf, welche über eine Gleitfläche 33 und eine Umlenkrolle 34 laufen. Die Gleitfläche 33 weist eine etwas vor der Umlenkrolle 34 liegende Stufe 35 auf, so dass die Bänder 32a-d am zwischen der Stufe 35 und der Umlenkrolle 34 liegenden Endabschnitt des Bandförderers 31 leicht abfallen und frei liegen, d.h. zwischen ihnen Platz zur Aufnahme der Frontwand 9 des Wäschestückträgers 20 ist, wie weiter unten genauer erläutert wird.

Der Wäschestückträger 20 liegt in Ladeposition mit seiner Rückwand 1 an der Anlagefläche an, derart, dass sein Boden 8 etwas über dem Ende des Bandförderers 31 liegt. Knapp vor dem Stopper, im Bereich des oberen Endes der Anlagefläche ist die bereits erwähnte Entriegelungsvorrichtung 36 angeordnet, ein Pneumatikzylinder, dessen Kolben in den senkrecht vorschieb- und zurückziehbaren Stössel 19 ausläuft.

### Die Beladung des Wäschestückträgers läuft wie folgt ab:

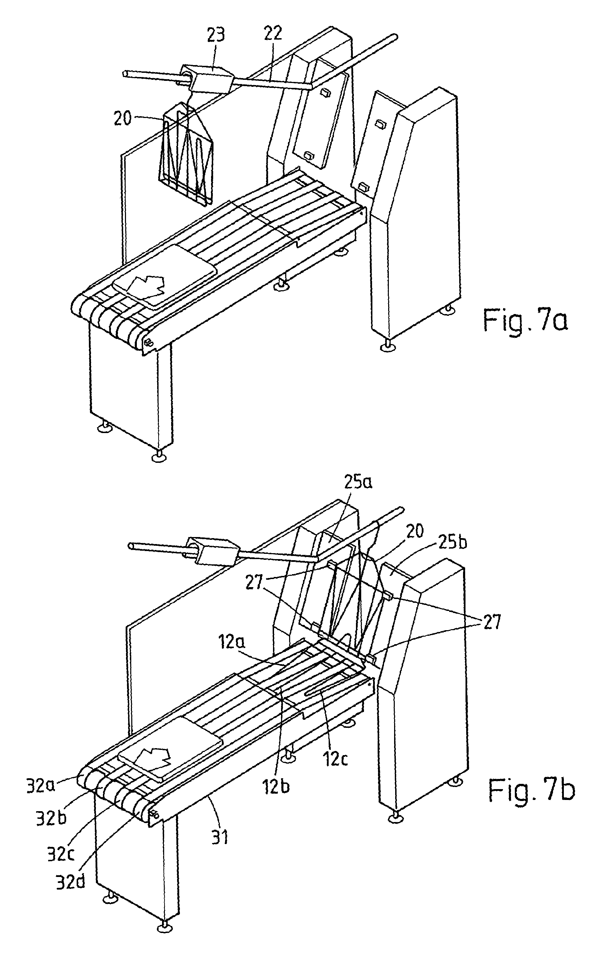

Der Wäschestückträger wird vom Vereinzeler 23 freigegeben (Fig. 7a) und längs der Schiene 22 in die Ladestation verschoben, so dass sich seine Rückwand 1 an die von den Flügeln 25a,b gebildete Anlagefläche legt. Darauf wird die Rückwand 1 durch Verschieben der Positioniernocken 27 aufeinander zu positioniert und fixiert. Der Kopf 29 der Umstellvorrichtung 28 befindet sich dabei in der unteren Grenzlage, so dass der Fortsatz 13 des Wäschestückträgers 20 in die Quernut 30 eingeführt wird (die Umstellvorrichtung 28 und die Entriegelungsvorrichtung 36 sind in den Fig. 7a-e nicht dargestellt, s. Fig. 5, 6).

Anschliessend wird die Verriegelung des Wäschestückträgers 20 durch die Entriegelungsvorrichtung 36 gelöst und der Kolben der Umstellvorrichtung 28 gehoben. Dadurch wird die Klappe des Wäschestückträgers 20 nach unten geschwenkt und in die Ladestellung gebracht. Der mittlere Bügel 12b und die seitlichen Bügel 12a,c der Frontwand 9 nehmen dabei Lagen zwischen den Bändern 32b, 32c bzw. 32a, 32b und 32c, 32d des Bandförderers 31 ein, wobei sie überwiegend etwas tiefer liegen als die Bänder 32a-d (Fig. 7b).

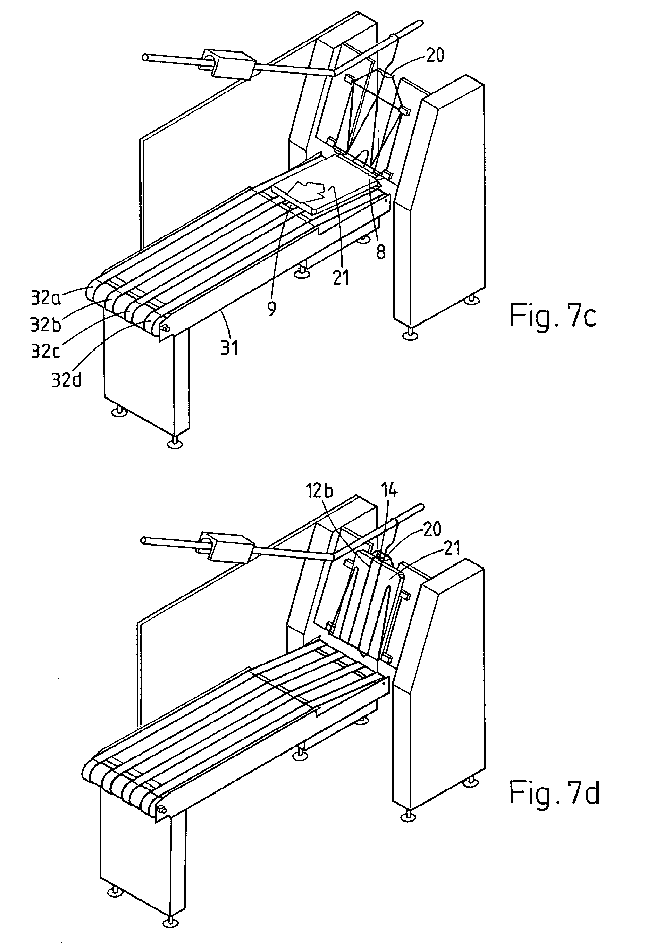

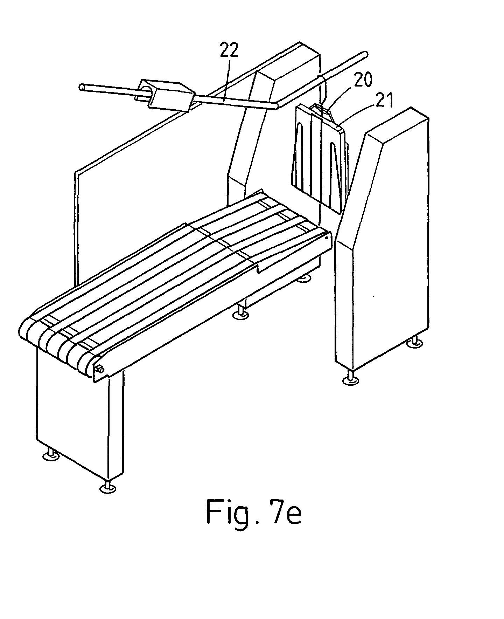

Nun ist der Wäschestückträger 20 bereit zur Aufnahme eines Wäschestücks wie des gefalteten Kittels 21, der ihm vom Bandförderer 31 zugeführt wird. Die Bänder 32a-d schieben den Kittel 21 über die Innenseite der Frontwand 9 bis zum Boden 8 des Wäschestückträgers 20 (Fig. 7c). Anschliessend wird der Kopf 29 der Umstellvorrichtung 28 nach unten gezogen und dadurch die Klappe des Wäschestückträgers 20 hochgeklappt, wobei der mittlere Bügel 12b mit der Verriegelung 14 einschnappt, so dass die Klappe des mit dem Kittel 21 beladenen Wäschestückträgers 20 in der Transportstellung verriegelt ist (Fig. 7d). Schliesslich werden die Positioniernocken 27 zurückgezogen, die beiden Flügel 25a,b der Ladestation nach hinten geklappt und der Stopper deaktiviert. Der mit dem Kittel 21 beladene Wäschestückträger 20 wird dann vom nächsten Mitnehmer längs der Schiene 22 weitergeschoben (Fig. 7e). Dank der jeweils gitterartigen, über die ganze Fläche Berührungspunkte bietenden Ausbildung der Rückwand 1 und der Frontwand 9 des Wäschestückträgers 20 ist das zwischen denselben geklemmte Wäschestück in seinem z.B. gefalteten Zustand zuverlässig fixiert.

Eine Entladestation entspricht in ihrem Aufbau grundsätzlich der beschriebenen Beladestation, doch ist ein Anschlag vorhanden, der das untere Ende des Wäschestückträgers festhält, während die Flügel etwas gegen den Bandförderer geneigt sind, so dass der Wäschestückträger, wenn die Flügel nach innen geschwenkt werden, eine entsprechend geneigte Lage annimmt. Ein Entladevorgang läuft dann auf der Entladestation im wesentlichen analog ab. Der mit einem Wäschestück beladene Wäschestückträger wird in die Ladeposition verbracht. Anschliessend wird die Klappe entriegelt und mittels der Umstellvorrichtung in die Ladestellung gebracht und das Wäschestück, das dabei auf die nun in Gegenrichtung laufenden Bänder des Bandförderers gesenkt wird, abtransportiert. Anschliessend wird der leere Wäschestückträger mittels der Umstellvorrichtung geschlossen, also die Klappe in die Transportstellung gebracht und weitertransportiert.

Die Entladestation kann jedoch auch genau wie die Beladestation nach Fig. 5, 6 ausgebildet und lediglich zusätzlich mit einem hinter den Flügeln 25a,b angebrachten Pneumatikkolben versehen sein, der zwischen denselben und durch die Rückwand 1 des Wäschestückträgers hindurch auf das Wäschestück, also z.B. den Kittel 21 dahingehend einwirkt, dass er nach dem Oeffnen oder beim Oeffnen der Klappe auf den Bandförderer 31 kippt.

### Bezugszeichenliste

- 1: Rückwand
- 2: Haken
- 3: Rahmen
- 4: Querstab
- 5: Querstab
- 6: Gitterelement
- 7: Platte
- 8: Boden
- 9: Frontwand
- 10: Achse
- 11a,b: Scharniere
- 12a,b,c: Bügel
- 13: Fortsatz
- 14: Verriegelung
- 15: Schieber
- 16: Fortsatz
- 17: Ausnehmung
- 18: Druckfeder
- 19: Stössel
- 20: Wäschestückträger
- 21: Kittel
- 22: Schiene
- 23: Vereinzeler
- 24a,b: Ständer
- 25a,b: Flügel
- 26: Spalt
- 27: Positioniernocken
- 28: Umstellvorrichtung
- 29: Kopf
- 30: Quernut
- 31: Bandförderer
- 32a,b,c,d: Bänder
- 33: Gleitfläche
- 34: Umlenkrolle
- 35: Stufe
- 36: Entriegelungsvorrichtung

## Patentansprüche

1. Wäschestückträger für Wäschestücke zum Gebrauch in einer Transporteinrichtung, **dadurch gekennzeichnet, dass** er eine Rückwand (1) aufweist mit einem oberen Ende, an welchem sie ein Kupplungsteil zur Herstellung einer Verbindung mit der Transporteinrichtung trägt und einem in einer Längsrichtung von besagtem oberen Ende beabstandeten unteren Ende, sowie mit einer Klappe, deren Position zur Rückwand (1) zwischen einer Transportstellung, in der sie zur Rückwand (1) im wesentlichen parallel ist und einen ersten Abstand zu ihr aufweist und einer Ladestellung, in der sie mindestens über einen Teil ihrer Länge einen grösseren zweiten Abstand zur Rückwand (1) aufweist, umstellbar ist.

2. Wäschestückträger nach Anspruch 1, **dadurch gekennzeichnet, dass** die Klappe an der Rückwand (1) um eine an deren unterem Ende querverlaufende Achse schwenkbar angelenkt ist, derart, dass die Klappe in der Ladestellung einen positiven Winkel zur Rückwand (1) einnehmen kann.

3. Wäschestückträger nach Anspruch 2, **dadurch gekennzeichnet, dass** die Klappe einen Boden (8) umfasst, längs dessen hinterem Rand die Achse verläuft sowie eine Frontwand (9), welche an den der Rückwand (1) gegenüberliegenden Rand des Bodens (8) annähernd im rechten Winkel anschliesst.

4. Wäschestückträger nach einem der Ansprüche 1 bis 3, **dadurch gekennzeichnet, dass** die Klappe einen Fortsatz (13) für den Eingriff mit einer Umstellvorrichtung (28) aufweist.

5. Wäschestückträger nach den Ansprüchen 3 und 4, **dadurch gekennzeichnet, dass** der Fortsatz (13) am der Rückwand (1) zugewandten Rand des Bodens (8) angebracht ist und über die Rückwand (1) hinausragt.

6. Wäschestückträger nach einem der Ansprüche 1 bis 5, **dadurch gekennzeichnet, dass** er eine lösbare Verriegelung (14) aufweist, welche die Klappe in der Transportstellung festhält.

7. Wäschestückträger nach Anspruch 6, **dadurch gekennzeichnet, dass** die Verriegelung (14) zwischen dem oberen Ende der Klappe und der Rückwand (1) wirksam ist.

8. Wäschestückträger nach Anspruch 7, **dadurch gekennzeichnet, dass** die Verriegelung (14) eine Schnappverriegelung ist mit einem zur Entriegelung gegen die Kraft eines Federelements nach unten drückbaren Schieber (15), der an der Oberseite eine Ausnehmung (17) zur Aufnahme eines Elements der Klappe aufweist.

9. Wäschestückträger nach einem der Ansprüche 3 bis 8, **dadurch gekennzeichnet, dass** die Frontwand (9) durchbrochen ist, derart, dass mindestens ein vom oberen Ende ausgehend in Längsrichtung im wesentlichen durchgehender Streifen frei ist und vorzugsweise mindestens zwei seitlich voneinander beabstandete derartige Streifen frei sind.

10. Wäschestückträger nach Anspruch 9, **dadurch gekennzeichnet, dass** die Frontwand (9) gitterartig ausgebildet ist mit mindestens zwei, vorzugsweise drei sich vom unteren Ende her im wesentlichen über die Länge der Frontwand erstreckenden seitlich voneinander beabstandeten Bügeln (12a, 12b, 12c), wobei der mindestens eine freie Streifen zwischen benachbarten Bügeln liegt.

11. Ladestation zum Be- oder Entladen von Wäschestückträgern (20) nach einem der Ansprüche 1 bis 10 mit Wäschestücken, mit einer Positioniereinrichtung zur Positionierung eines von einer Transporteinrichtung zugeführten zu be- oder entladenden Wäschestückträgers (20) in einer Ladeposition sowie einer Umstellvorrichtung (28) zum Umstellen der Klappe des Wäschestückträgers (20) zwischen der Ladestellung und der Transportstellung derselben.

12. Ladestation nach Anspruch 11, **dadurch gekennzeichnet, dass** die Positioniereinrichtung für die Rückwand (1) eine aus dem Transportweg entfernbare Anlagefläche umfasst.

13. Ladestation nach Anspruch 12, **dadurch gekennzeichnet, dass** die Anlagefläche von zwei abklappbaren Flügeln (25a, 25b) gebildet wird.

14. Ladestation nach Anspruch 12 oder 13, **dadurch gekennzeichnet, dass** die Anlagefläche von mindestens einem Paar aufeinander zu bewegbarer Positioniernocken (27) überragt wird.

15. Ladestation nach einem der Ansprüche 11 bis 14, zum Beoder Entladen eines Wäschestückträgers (20) nach Anspruch 4 oder 5, **dadurch gekennzeichnet, dass** die Umstellvorrichtung (28) einen im wesentlichen senkrecht verschiebbaren, zum Eingriff mit dem Fortsatz (13) der Klappe geeigneten Kopf (29) umfasst.

16. Ladestation nach einem der Ansprüche 11 bis 15, zum Beoder Entladen eines Wäschestückträgers (20) nach einem der Ansprüche 6 bis 8, **dadurch gekennzeichnet, dass** sie eine Entriegelungsvorrichtung (36) zum Lösen der Verriegelung (14) der Klappe des Wäschestückträgers (20) in der Transportstellung aufweist.

17. Ladestation nach Anspruch 16, zum Be- oder Entladen eines Wäschestückträgers nach Anspruch 8, **dadurch gekennzeichnet, dass** die Entriegelungsvorrichtung (36) einen im wesentlichen senkrecht vorschiebbaren und zurückziehbaren Stössel (19) oder einen Hebel umfasst.

18. Ladestation nach einem der Ansprüche 11 bis 17, **dadurch gekennzeichnet, dass** sie einen Bandförderer (31) umfasst, dessen Ende knapp vor der Positioniereinrichtung und unterhalb derselben liegt.

19. Ladestation nach Anspruch 18, zum Be- oder Entladen eines Wäschestückträgers (20) nach Anspruch 9 oder 10, **dadurch gekennzeichnet, dass** der Bandförderer (31) mindestens ein Band (32a, 32b, 32c, 32d) aufweist und vorzugsweise mindestens zwei seitlich voneinander beabstandete Bänder (32a, 32b, 32c, 32d), wobei bei Ladestellung der Klappe jedes der Bänder (32a, 32b, 32c, 32d) im Bereich eines freien Streifens der Frontwand (9) liegt.

20. Ladestation nach Anspruch 19, **dadurch gekennzeichnet, dass** die Bänder (32a, 32b, 32c, 32d) an einem Endabschnitt frei liegen, derart, dass die Frontwand (9) in der Ladestellung zwischen denselben mindestens zum Teil unter deren Höhe absenkbar ist.
